# EUROPEAN PATENT SPECIFICATION

(11) **EP 0 598 863 B1**
(45) Date of publication and mention of the grant of the patent: **13.08.1997**
(21) Application number: 93909114.6
(22) Date of filing: 07.04.1993
(51) Int. Cl.: H04Q 7/22

(54) **A METHOD OF TRAFFIC CHANNEL ASSIGNMENT IN A MOBILE TELECOMMUNICATION SYSTEM**
VERFAHREN FÜR SPRACHKANALZUWEISUNG IN EINEM MOBIL-TELEKOMMUNIKATIONSSYSTEM
PROCEDE D'ATTRIBUTION DE VOIES DE TRAFIC DANS UN SYSTEME DE TELECOMMUNICATIONS MOBILE

(30) Priority: 16.04.1992 SE 9201227
(43) Date of publication of application: 01.06.1994
(73) Proprietor: TELEFONAKTIEBOLAGET LM ERICSSON, 126 25 Stockholm (SE)
(72) Inventor: BODIN, Stig, Roland, S-163 56 Spanga (SE); NORDSTRAND, Ingrid, Viola, S-172 48 Sundbyberg (SE)
(74) Representative: Lövgren, Tage
(86) International application number: SE9300300
(87) International publication number: WO9321741

(56) References cited:
- EP-A- 0 419 243
- US-A- 5 095 531

## Description

### TECHNICAL FIELD

The present invention relates to a method pertaining to a mobile telecommunication system for assigning a traffic channel to a mobile station which requests registration of its position in the land stationed network of the mobile telecommunication system, wherein the mobile has control over at least some of a number of possible functions in the mobile telecommunication system, and wherein a calling subscriber requests to be connected to the mobile via the network, said method comprising the following method steps:
- the mobile requests the assignment of a signalling channel from the network through an access procedure;
- the network assigns the signalling channel and sends information concerning this channel to the mobile;
- the mobile switches to the signalling channel and requests the registration;
- the network registers the position of the mobile and transmits an accept message to the effect that the mobile has been accepted by the network and also a connection establishment message to the effect that the requested connection awaits; and
- the mobile checks the connection establishment message and confirms that the connection requested is accepted.

The invention also pertains to a corresponding method in a mobile telecommunication system when assigning a traffic channel to a mobile station which calls for registration of its position in the land network of the mobile telecommunication system in which the mobile requests to be connected to a called subscriber via the network.

### BACKGROUND ART

Mobile stations which are included in a mobile telecommunication system may have mutually different properties with regard, for instance, to the radio power of the mobile, the frequencies controlled by the mobile, or the possibility of the mobile to utilize some form of encryption algorithm. The land network of the system may correspondingly also have different properties within different geographical regions. The mobiles and the land network exchange radio messages concerning their respective capabilities, so as to enable the capacity of the mobile telecommunication system to be used effectively when establishing radio connections between the network and the mobiles.

A general description of the construction of a mobile telecommunication system is given in the standard GSM 01.02, version 3.0.0. The land stationed network is constructed of mobile switching centres which are connected to a telecommunication network, for instance a public telecommunication network, and also to a plurality of base station systems. The network is divided geographically into registration regions each comprising a plurality of cells. A base station system has a plurality of base radio stations and is able to serve one or more registration regions.

A general description of how a traffic channel is assigned in the mobile telecommunication system is found in "CME 20 SYSTEM TRAINING DOCUMENT", EN/LZT 120 226 R1A, Ericsson Radio Systems AB, 1991. This channel assignment for the European mobile telecommunication system, GSM-system, is described more specifically in a document ETSI/GSM 04.08, version 3.13.0. In general, this channel assignment can be described in the following way. A mobile requests registration of its position in the network, for instance when the power of the mobile is switched on or when the mobile comes within the range of the base radio stations in a registration region. The mobile requests a signalling channel through the agency of an access channel and is assigned a signalling channel by the network and then switches over to this channel. The mobile states certain of its capabilities on the signalling channel in a first classification message, for instance its power class. The mobile receives an acceptance message from the network, the signalling channel is released and the mobile listens. When the mobile later desires a connection, a new procedure is carried out with access, signalling channel assignment and the assignment of a traffic channel for the connection. In this procedure, the mobile again states its capabilities in a second, expanded classification message, for instance the frequencies controlled by the mobile and whether or not the mobile is able to receive a so-called short message.

It may happen that the mobile requests registration and, at the same time, also requests permission to use the signalling channel when registering in order to establish a traffic connection channel. For instance, the mobile operator switches on the power and, at the same time, dials a number to a paged subscriber. It may also happen that the network has a request for a connection from a subscriber to the mobile when the mobile requests the registration. In this case, the system is able to establish a traffic channel for the connection between the mobile and the network.

### DISCLOSURE OF THE INVENTION

According to the present invention, attention is paid to the possibility of problems occurring in a GSM-specified mobile telecommunication network when establishing a connection that is immediately associated with the registration procedure. When registering a mobile, the information obtained by the network via the first classification message concerning the capacity of the mobile is relatively scanty. When the network has a request for a connection, this connection is established without the mobile giving further information concerning its capacity. If, instead, the mobile requests a connection in conjunction with the registration request, full information concerning the capacity of the mobile is transmitted to the network. This information, however, is not available to the base station system which makes the channel assignment. When the capabilities of the system are increased with new or extended functions, for instance a relevant increase in the frequency band of the GSM-system with ΔF = 10 MHz, the additional functions will be poorly utilized. The network and certain mobiles obtain greater capacity by being equipped with the additional functions, for instance the new frequency band or the ability to receive short messages. This new capacity cannot be readily utilized when establishing a radio connection in conjunction with registration. In order to enable all functions of the mobile to be utilized, it is necessary with present-day signalling procedures according to the GSM-system to terminate the registration procedure and establish a new signalling channel. This prolongs the time taken to establish a connection in conjunction with registration. If the signalling channel established in the registration procedure is retained in order not to prolong the connection establishing time, not all of the functions of the mobile are utilized.

The problem is solved in accordance with the invention in that during the registration procedure, the network asks the mobile on the signalling channel already established for information concerning those functions over which the mobile has control. According to an alternative, the base station unit receives information from other parts of the network, for instance from a mobile switching centre, with respect to the ability of the mobile to utilize the additional or extended functions.

The invention is characterized by the characterising features set forth in the following independent Claims.

### BRIEF DESCRIPTION OF THE DRAWINGS

The invention will now be described in more detail with reference to an exemplifying embodiment thereof and also with reference to the accompanying drawings, in which
Figure 1 illustrates schematically the geographic construction of a cellular mobile telecommunication system;
Figure 2 is a schematic illustration of a base station unit;
Figure 3 is a diagram showing time slots in a time-shared radio channel;
Figure 4 illustrates a signal sequence in a time slot;
Figure 5 is a diagram which illustrates the construction of a logic, time-shared radio channel;
Figure 6 is a flow diagram of a known registration procedure;
Figure 7 is a flow diagram of a known procedure for connecting a call;
Figure 8 is a flow diagram which illustrates an inventive method for establishing a connection requested by the network;
Figure 9a is a flow diagram which illustrates an inventive method for establishing a connection requested by the mobile;
Figure 9b is a flow diagram which illustrates an alternative inventive method for establishing a connection requested by the mobile;
Figure 10 is a block schematic which illustrates a first classification message;
Figure 11 is a block schematic which illustrates a second, extended classification message;
Figure 12 is a block schematic which illustrates a mobile station; and
Figure 13 is a block schematic which illustrates the land stationed network of the mobile system.

### BEST MODES OF CARRYING OUT THE INVENTION

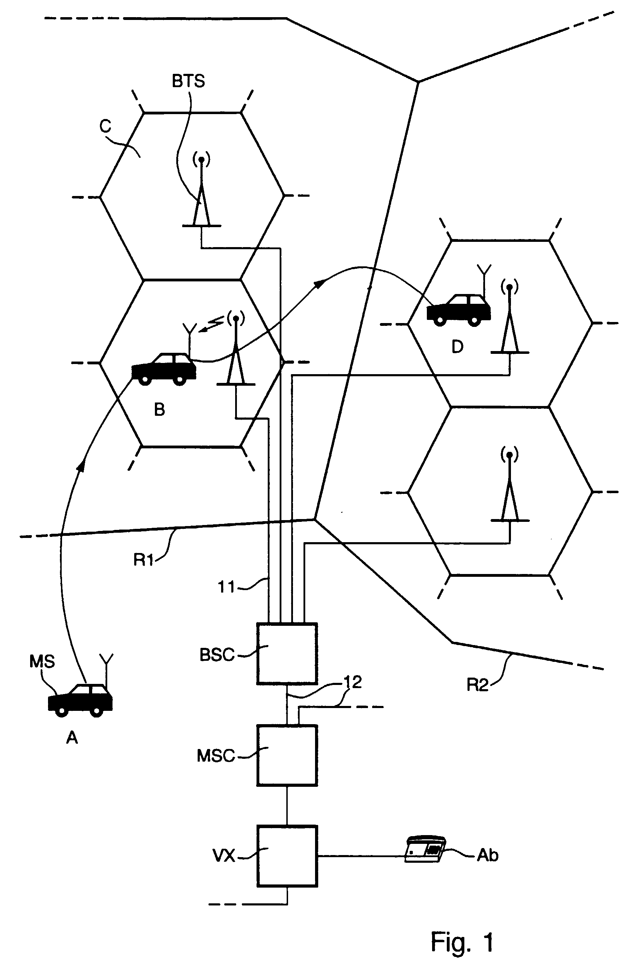

Figure 1 illustrates the geographical construction of a mobile telecommunication system which includes two separate registration regions R1 and R2. A mobile station MS which desires to carry-out traffic procedures via the mobile telecommunication system must register in one such registration region, as described in more detail below. The registration regions are divided into cells C, each accommodating a respective base radio station BTS. The base radio stations are connected to base control units BSC via lines 11. The base control units are connected by lines 12 to a mobile switching central MSC, which in turn is connected to the switchboard VX of a public telephone network. A stationary subscriber Ab in the public telephone network is connected to the switchboard VX. The base radio stations BTS, the base control units BCS, the mobile switching centre MSC and the connection lines 11 and 12 together form the land stationed network of the mobile telecommunication system. The mobile MS is shown in three different positions in Figure 1, referenced A, B and D.

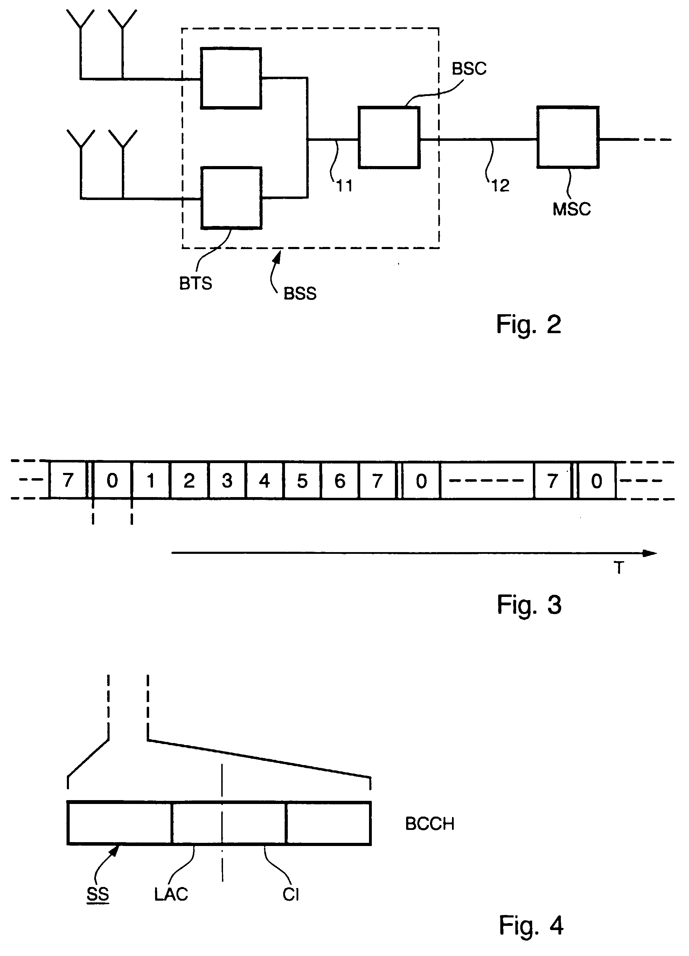

Figure 2 is a simple block schematic which illustrates a part of the land network. The mobile switching centre MSC is connected to a base station system BSS via the line 12. This base station system includes the base radio stations BTS which are connected to the base control unit BSC via the lines 11.

Separate mobile telecommunication systems are constructed in the manner illustrated in Figures 1 and 2, at least in principle. This also applies to the European mobile telecommunication system described in more detail in the aforesaid GSM-standard GSM 01.02. This mobile telecommunication system has been assigned a frequency band of F = 890-960 MHz which is divided into a larger number of frequency pairs which are essentially used as duplex channels. In turn, the frequencies in the GSM-system are time-shared in eight recurring time slots, as illustrated in Figure 3. In this Figure, the time is referenced T and the time slots are numbered from 0 to 7. Most of the frequencies are used to establish traffic connections between stationary and mobile subscribers, for instance for speech messages or data messages. A smaller number of the channels are used for signalling purposes between the network and the mobiles.

Figure 4 illustrates a signal sequence SS in the GSM-system for one such signalling channel, a so-called broadcast channel designated BCCH. This channel is unidirectional and is transmitted continuously from the base radio stations BTS at different frequencies for the individual cells C within a given area. The signal sequence SS is transmitted on the time slot having number 0 and is divided into two halves. The left-hand half in the Figure, to the left of the chain line, is common to all of the cells in a registration region, R1 or R2. This part of the signal sequence SS includes, for instance, a sequence LAC which identifies the registration region concerned. The right-hand half of the sequence SS includes a part CI which identifies a cell C.

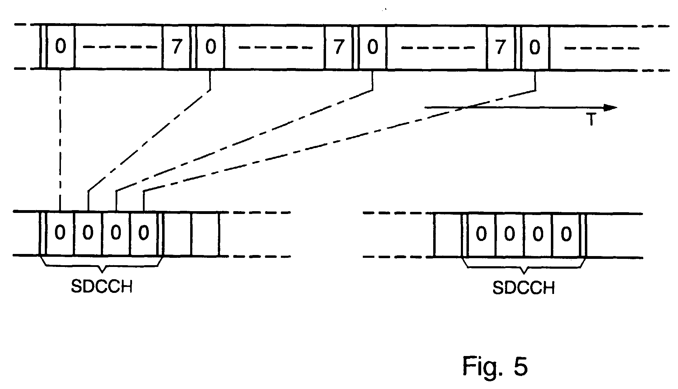

Figure 5 illustrates a further signalling channel, which is normally designated SDCCH. As in Figure 3, time is referenced T and the time slots are numbered from 0 to 7. The channel SDCCH is a so-called logic channel which is comprised of four 0-numbered time slots, as illustrated in the Figure with chain lines. The group containing the four time slots in the channel SDCCH re-occurs at regular intervals and is utilized by the mobile MS in Figure 1. A plurality of intermediate groups of four 0-numbered time slots are utilized for other purposes, for instance for signalling to other mobiles. It should be noted that the signalling channel SDCCH is two-directional and has two separate frequencies for communication between mobile and network and between network and mobile respectively.

Before the mobile MS can obtain a telephone connection via the network in Figure 1, it is necessary for the mobile to be registered in the registration region concerned. This registration is effected when the mobile MS is in an activated state and approaches the registration region R1 from the position A and comes within the range of one of the base radio stations BTS. Registration is also effected when the mobile is located in the registration region, the position B, and is then activated, or when the activated mobile moves to the position D and crosses the boundary of the registration region R2. The purpose of registration is to inform the network as to the position of the mobile therein and also for the network to check the authorization of the mobile. The mobile also sends certain information to the network, concerning the functions over which the mobile has control, i.e. the functional capability of the mobile, for instance its power capacity and which encryption algorithms it is capable of handling.

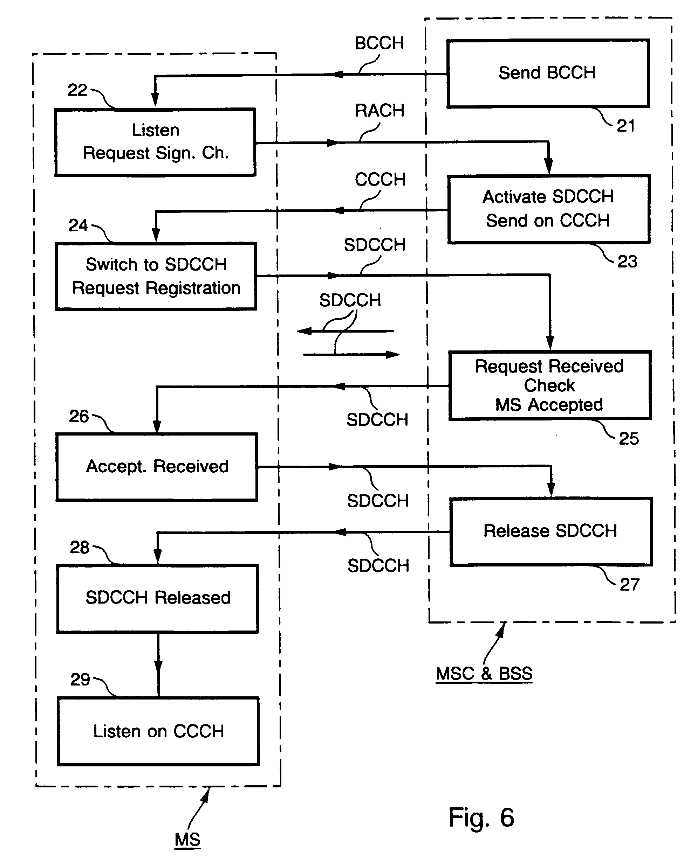

As before mentioned, the invention highlights those problems which occur in registration procedures in the aforesaid GSM-specified mobile telecommunication system when the mobile or the network requests the establishment of a call connection or a data-transmission connection at the same time as requesting registration. In order to explain the invention more closely, the registration and the establishment of a call connection will be described below in four different sections with reference to Figures 6-11:
- Registration without establishing a call connection.
- Establishing a call connection upon completion of registration.
- Registration together with the establishment of a call connection requested by the network.
- Registration together with the establishment of a call connection requested by the mobile.

### Registration without establishing a call connection, Figure 6

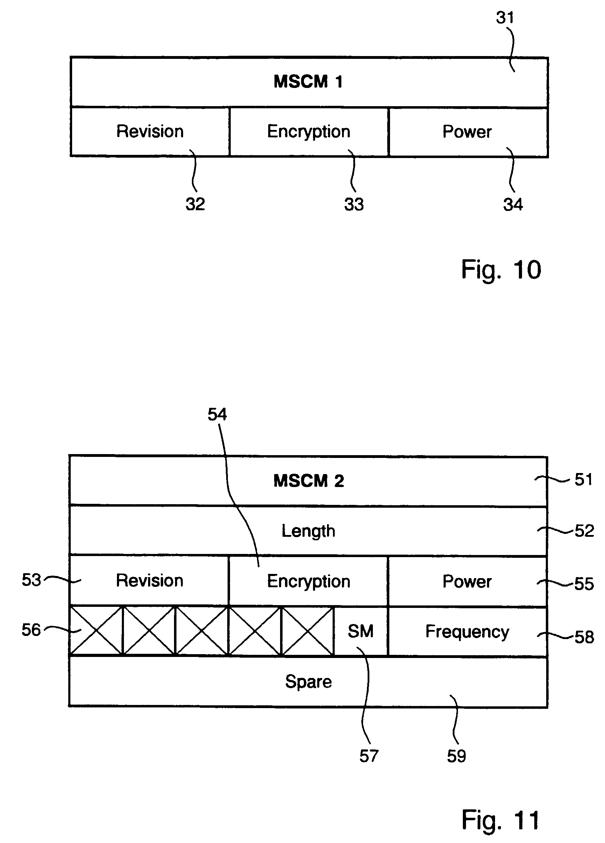

Figure 6 is a flow schematic which includes function blocks. The blocks to the right of the Figure are framed with chain lines and belong to the network and are referenced MSC&BSS, whereas the framed blocks to the left belong to the mobile MS. The arrowed lines between the right and the left half of the Figure indicate radio connections. In a block 21, the base radio station BTS transmits on the broadcast channel BCCH. The mobile MS requests registration as described above, for instance by the mobile operator switching on the mobile power when the mobile is in position B, as illustrated in block 22. The mobile listens on the channel BCCH and requests a connection on the signalling channel SDCCH, through an access procedure on the access channel RACH, Random Access Channel. The mobile then takes a listening mode and listens on a channel designated CCCH, Common Control Channel, which is transmitted by the base radio station BTS. The network pages the access channel RACH and receives on this channel the request from the mobile MS for a signalling channel SDCCH, as illustrated in block 23. The network then assigns and activates the signalling channel SDCCH and transmits to the mobile MS on the channel CCCH information concerning this channel, for instance frequencies and time slots. The mobile MS receives the information concerning the signalling channel SDCCH on the channel CCCH, as shown in block 24. The mobile MS now switches to the given frequencies and the given time slot of the signalling channel SDCCH, which is bidirectional. The mobile MS sends its request to be registered by the network on the channel SDCCH. This request includes a first classification message MSCM1, Mobile Station ClassMark 1, which is significant in obtaining an understanding of the present invention. This message is described more precisely in the GSM-specification GSM 04.08, version 3.13.0, and is again illustrated through the agency of a block schematic in Figure 10. The classification message includes a binary-eight block 31 which denotes that the message concerned is the classification message MSCM1. That part of the message MSCM1 which is transmitted in the registration request is comprised of a block 32 which denotes the revision state of the mobile, a block 33 which states whether or not the mobile has control over the given encryption algorithm, and a block 34 which states the power class of the mobile. The block 31 is not transmitted when requesting registration. The network receives the registration request of the mobile MS, in accordance with block 25. An exchange of signals then takes place between the mobile MS and the network on the signalling channel SDCCH. This exchange of signals is not illustrated in detail in Figure 6, but is merely indicated by two counter-directional arrows. This exchange of signals includes, for instance, a check from the network that the mobile MS is authorized to carry out traffic in the network. The reader is referred to the specification GSM 04.08 for more details of this signal exchange procedure. The network accepts the mobile MS and informs the mobile on the signalling channel SDCCH that the request for registration made by the mobile MS is granted. The mobile MS receives the acceptance of its request in accordance with a block 26. In accordance with a block 27, the network sends a message to the mobile MS on the signalling channel SDCCH to the effect that the signalling channel shall be released and itself effects this release. The mobile is now registered in the network and releases the signalling channel in accordance with block 28, and listens on the channel CCCH in accordance with block 29.

It should be noted that the registration procedure according to this section follows a procedure known from the GSM-specification. The given signalling channel having the standard designation SDCCH can be replaced with other similar logic channels.

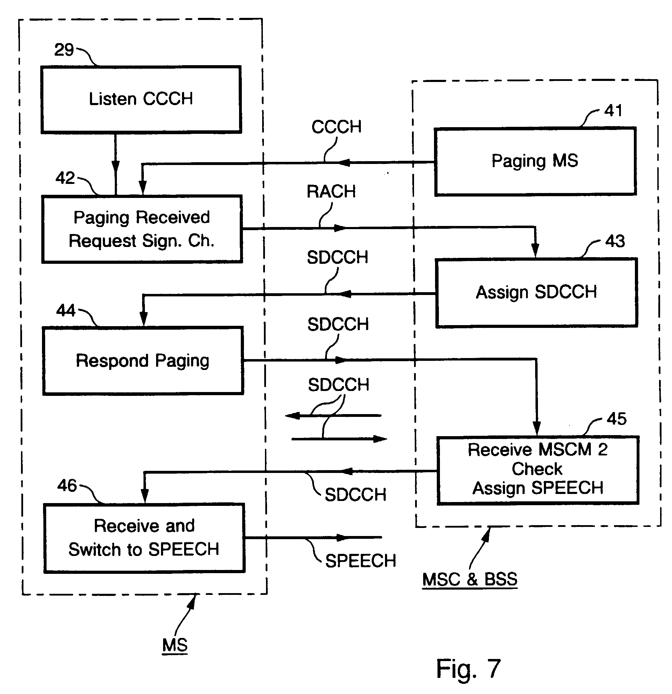

### Establishing a call connection upon completion of registration, Figure 7

Figure 7 is divided into a left and a right half, similar to Figure 6. It is presupposed that the mobile is registered in the network and that the subscriber Ab in Figure 1 wishes to call the mobile MS. The subscriber Ab is connected to the land network of the mobile telecommunication system via the public telephone network and its switchboards VX, so that it can be connected to the mobile MS. As described above, the mobile MS listens on the channel CCCH, as illustrated by block 29 in Figure 7. The blocks shown to the right in this Figure also belong to the land network and the blocks shown to the left of the Figure belong to the mobile MS. In accordance with block 41, the base radio station BTS transmits a mobile paging signal on the channel CCCH. The mobile MS receives the paging signal in accordance with block 42 and requests to be assigned the signalling channel SDCCH, as described with reference to Figure 6 and in accordance with blocks 22, 23 and 24. This procedure is solely shown in the Figure by the channels RACH and SDCCH and a block 43. The mobile MS responds to the paging signal on the assigned channel SDCCH, in accordance with block 44. This response includes a second, extended classification message MSCM2, Mobile Station ClassMark 2, which is particularly significant in obtaining an understanding of the present invention. The classification message is described in more detail in GSM-specification GSM 04.08, version 3.13.0, and is reproduced in the form of a block schematic in Figure 11. The classification message has a binary-eight block 51 which denotes that it is the classification message MSCM2. That part of the classification message which is transmitted with the response is comprised of blocks 52-59, of which the block 52 states the length of the information. The revision state, encryption capabilities and power class of the mobile MS are stated in respective blocks 53, 54 and 55. The X-marked blocks 56 in the Figure are reserve blocks, the block 57 states whether or not the mobile MS is able to receive the short message SM, and the block 58 states the frequency capabilities of the mobile MS. Finally, the block 59 is a reserve block. It is also shown in Figure 7, block 45, that the base control unit BSC in the network receives, reads and stores the message from the mobile MS and sends the message further to the mobile switching centre MSC. The mobile switching centre then carries out a signal exchange between the network and the mobile MS on the signalling channel SDCCH, this procedure being indicated solely by two-directional arrows in the Figure. The authority of the mobile for instance is checked in this signal exchange process. The signal exchange is terminated by the mobile being accepted and the base control unit BSC assigns a speech channel SPEECH to the connection. Because the extended classification message MSCM2 includes information relating to the frequencies over which the mobile MS has control, the base control unit BSC is able ta choose from among all given frequencies. When both the mobile MS and the network have control over the aforesaid additional frequency band ΔF = 10 MHz, the base control unit is thus able to select a channel in this frequency band. The mobile MS receives the information concerning the speech channel SPEECH in accordance with block 46, switches to this channel and releases the signalling channel SDCCH.

The method described with reference to Figure 7, i.e. the establishment of a call connection after an earlier completion of a registration process is known from the GSM-specification. In the Figure 11 illustration, the extended classification message MSCM2 includes information as to whether or not the mobile MS has a short-message capability and also includes spaces that are reserved for other functions that can distinguish between different mobiles. The network receives through the classification message MSCM2 information concerning all of the functions and capabilities of the mobile MS and is able to utilize these functions.

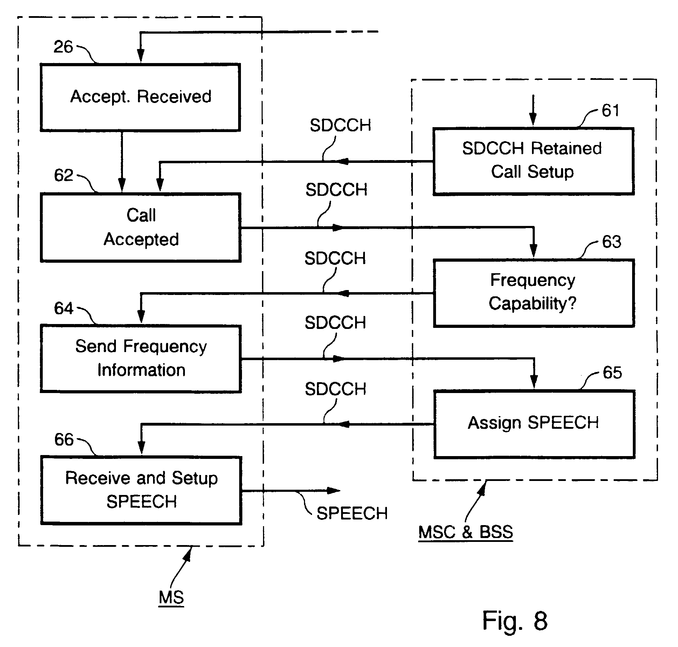

### Registration with the establishment of a call connection requested by the network, Figure 8

Similar to Figures 6 and 7, Figure 8 is divided into a right-hand part for the mobile MS and a left-hand part for the network MSC&BSS. The method illustrated in Figure 8 constitutes a first embodiment of the invention. The method follows the description to Figure 6 up to and including the block 26, in which the mobile MS receives the message from the network that the request made by the mobile for registration has been accepted by the network. A call from the subscriber Ab waits in the network, and consequently the signal channel SDCCH is not released by the network, in accordance with block 61. The network informs the mobile MS on the channel SDCCH that a call will be connected. The mobile receives the message concerning the establishment of a call connection in block 62 and carries out the necessary checks. The mobile accepts the call connection and informs the network to this effect on the signalling channel SDCCH. As will be evident from the description given in the aforegoing up to Figure 6, the mobile MS has sent the first classification message MSCM1, which contains no information as to the frequency capability of the mobile. Neither has any other frequency information been transmitted from the mobile MS. According to the invention, the network now asks the mobile MS to disclose the frequencies or other functions over which the mobile has control, in accordance with block 63. The question is sent to the mobile MS on the signalling channel SDCCH. The mobile receives the query and sends the information requested to the network on the channel SDCCH, in accordance with block 64. The frequency information is read at least by the base control unit BSC, which according to block 65 assigns the speech channel SPEECH for the speech connection from the subscriber Ab to the mobile MS. This channel can be chosen from within the whole of the frequency range over which the mobile MS has control. The network sends information concerning the assigned speech channel SPEECH to the mobile MS on the signalling channel SDCCH. The mobile receives the information on the assigned channel, in accordance with block 66, releases the signalling channel SDCCH and switches to the assigned speech channel SPEECH for the call connection.

According to this embodiment, the network has requested the mobile to disclose the frequency range over which it has control, i.e. its frequency capability. As before mentioned, it is now appropriate to extend the frequency band in the GSM-system with ΔF = 10 MHz in accordance with specification GSM 05.05, version 4.1.0, and different mobiles may therefore have different frequency capacities. However, the mobiles are able to distinguish themselves in other respects, for instance whether or not the short message SM is accepted. According to the present invention, the network will then ask the mobile whether or not it also has control over this function. The network may also ask the mobile whether it has control over other functions which only some of the mobiles will be equipped with in the future. These future functions may be functions which are transmitted with the extended classification message MSCM2 and for which reserved space is found, in accordance with Figure 11.

In block 63, the network asks the mobile MS to disclose its frequency capabilities and also its ability to control other functions, and, in accordance with the illustrated embodiment, the response given by the mobile in answer to this question can be effected in two alternative ways, in block 64. According to a first alternative, the network sends a message with a direct question concerning the functions over which the mobile has control, for instance its frequency capability. The message includes necessary elements according to GSM 04.08, for instance the type of message concerned and is headed "Question relating to frequency capability". The mobile replies to this message with its own message headed "Response to frequency question", which contains the requested frequency information. According to another alternative, the network asks the mobile to disclose its classification, by sending a message headed "Question concerning classification". In response to this message, the mobile MS initiates a procedure for changing the classification, which is specified in GSM 04.08, version 3.11.0, and designated "CLASSMARK CHANGE procedure". Through this procedure, the mobile transmits the second, extended classification message MSCM2 which replaces the first classification message MSCM1 sent from block 24, Figure 6.

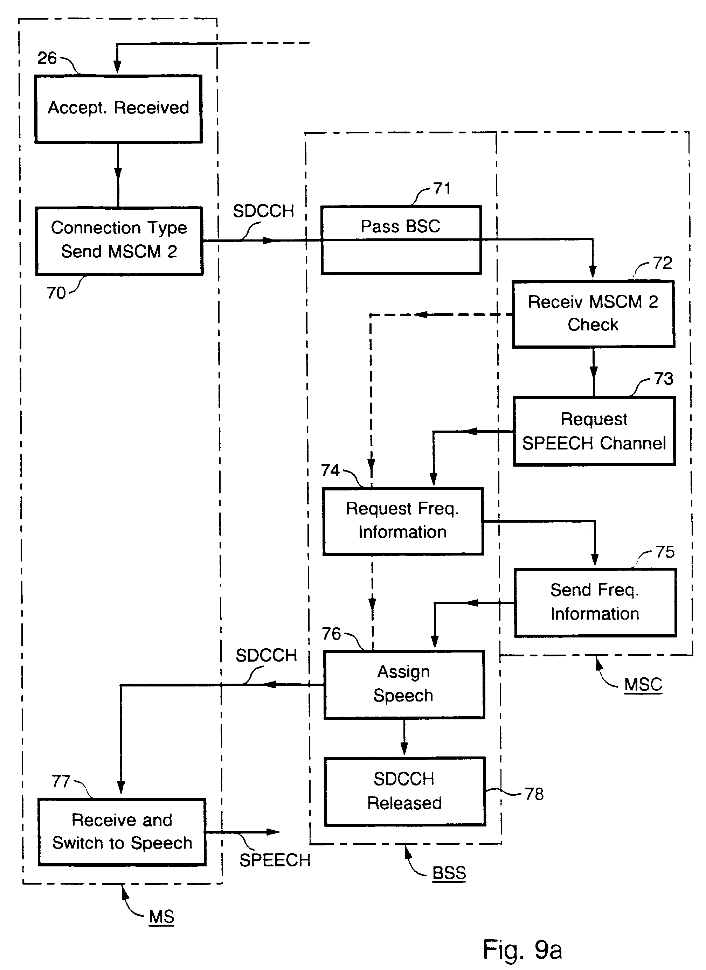

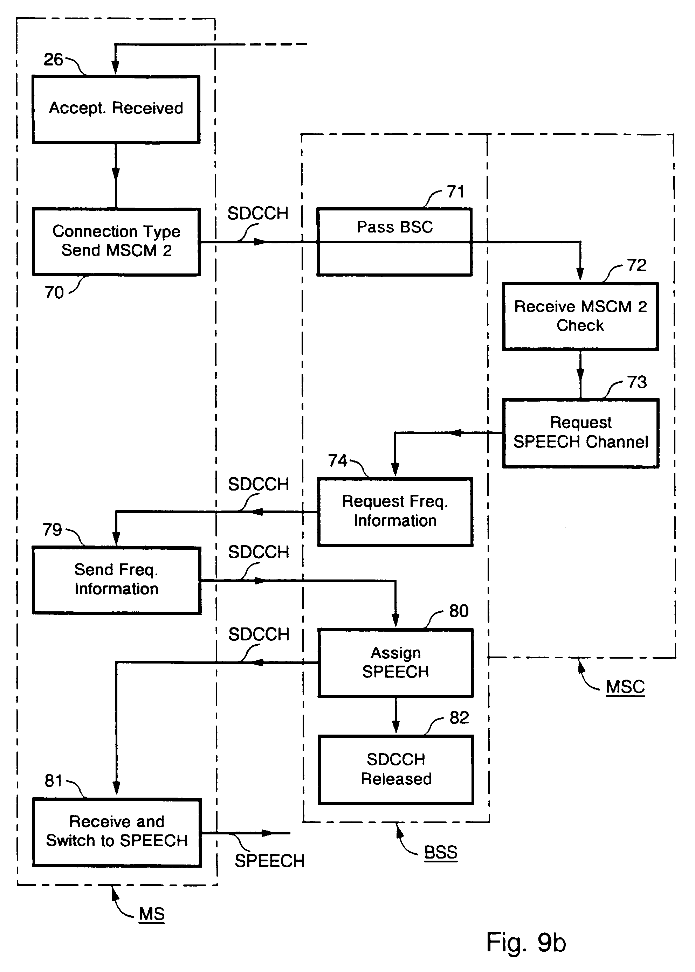

### Registration with the establishment of a call connection requested by the mobile, Figure 9a and Figure 9b

This procedure is concerned with a second embodiment of the invention. According to this embodiment, the network cannot be considered as a unit and it is necessary to distinguish between the mobile switching centre MSC and the base station system in order to understand the invention. Consequently, each of the Figures 9a and 9b is comprised of three framed columns which each contain blocks, of which the left column refers to the mobile MS, the centre column refers to the base station system BSS and the right column refers to the mobile switching centre MSC. The method follows the description to Figure 6 up to and including the block 24. Similar to the aforedescribed procedure, the mobile MS sends a registration request, which includes the first classification message MSCM1. In addition, the mobile sends to the network on the assigned signalling channel SDCCH information to the effect that the mobile MS wishes to establish a call connection to the subscriber Ab. The procedure then continues in the way described above with reference to the blocks 25 and 26. The network, however, does not release the signalling channel SDCCH, since the mobile has indicated that it desires to establish a call connection. According to block 70 in Figure 9a, the mobile MS sends information concerning the desired connection on the signalling channel SDCCH, for instance whether the connection desired is a speech connection or a data connection. In addition, the mobile also sends the second, extended classification message MSCM2. The base station system BSS receives this information and sends it further to the mobile switching centre MSC, without reading or storing the information, as illustrated in block 71. This is in accordance with the GSM-specification and is illustrated in the Figure by extending the line for the channel SDCCH through the block 71. The mobile switching centre MSC receives the classification message MSCM2, in accordance with block 72, and carries out the necessary checks. In a block 73, the mobile switching centre MSC requests the base control unit BSC in the base station system BSS to assign the speech channel SPEECH to the speech connection requested by the mobile MS. This channel assignment request is received by the base control unit BSC in a block 74. According to the invention, the base control unit BSC herewith asks the mobile switching centre MSC for information concerning the frequency capability of the mobile MS. The mobile switching centre MSC receives this request in accordance with block 75, and sends the information requested to the base control unit BSC. This unit assigns the speech channel SPEECH for the requested connection in accordance with block 76, and sends information concerning this speech channel to the mobile MS on the signalling channel SDCCH. The mobile MS switches to the assigned speech channel SPEECH, in accordance with block 77, and releases the signalling channel SDCCH. The base control unit BSC releases the signalling channel SDCCH, in accordance with block 78.

According to one inventive alternative, the mobile switching centre MSC can send frequency information to the base control unit BSC without being asked to do so by the base control unit. The mobile switching centre MSC sends the frequency information simultaneously with its request for channel assignment in accordance with block 73. The base control unit BSC receives the frequency information and, as illustrated by a broken line between the block 74 and 76, can assign a speech channel directly. It also lies within the scope of the invention for the mobile switching centre MSC to send the frequency information to the base control unit BSC before a speech channel is requested. This is shown by a broken line between the block 72 and 74.

When the mobile MS requests for a call to be connected with the subscriber Ab in conjunction with registration of the mobile, according to one variant of the invention, the base control unit BSC may request frequency information from the mobile MS, as described herebelow with reference to Figure 9b. The method illustrated in Figure 9b coincides with the method described in the beginning of the description of Figure 9a. In accordance with block 70, information concerning the type of connection desired is transmitted together with the second classification message MSCM2, via the base station system BSS, block 71, to the mobile switching centre MSC, block 72. This asks for a speech channel to be assigned, block 73, and the request is sent to the base control unit BSC, block 74. According to this variant of the inventive method, the base control unit BSC now requests frequency information from the mobile MS. This request is sent to the mobile on the signalling channel SDCCH, in accordance with block 79. The mobile MS responds by sending the frequency information requested to the base station unit BSC on the signalling channel SDCCH, which receives the information in accordance with block 80. The base control unit now makes the channel assignment requested by the mobile switching centre MSC and sends information concerning the assigned speech channel SPEECH to the mobile MS on the signalling channel SDCCH. The mobile MS establishes the assigned speech channel SPEECH in accordance with block 81, and releases the signalling channel SDCCH. The base control unit releases the signalling channel SDCCH, in accordance with block 82.

The invention has been described in the aforegoing with reference to Figure 8 in the event of the network requesting a connection to the mobile MS. In this passage of the description, it is described, for instance, how frequency information is transmitted to the network either through the messages "Request frequency capability" and "Response to frequency question" or through the messages "Classification query" and the response "CLASSMARK CHANGE procedure". The frequency information is transmitted in a corresponding manner when the mobile desires to establish a connection with the subscriber Ab, as described with reference to Figure 9a and Figure 9b. When the mobile switching centre MSC sends information to the base control unit BSC without being asked, from the block 72 directly to the block 74, only the response messages are transmitted.

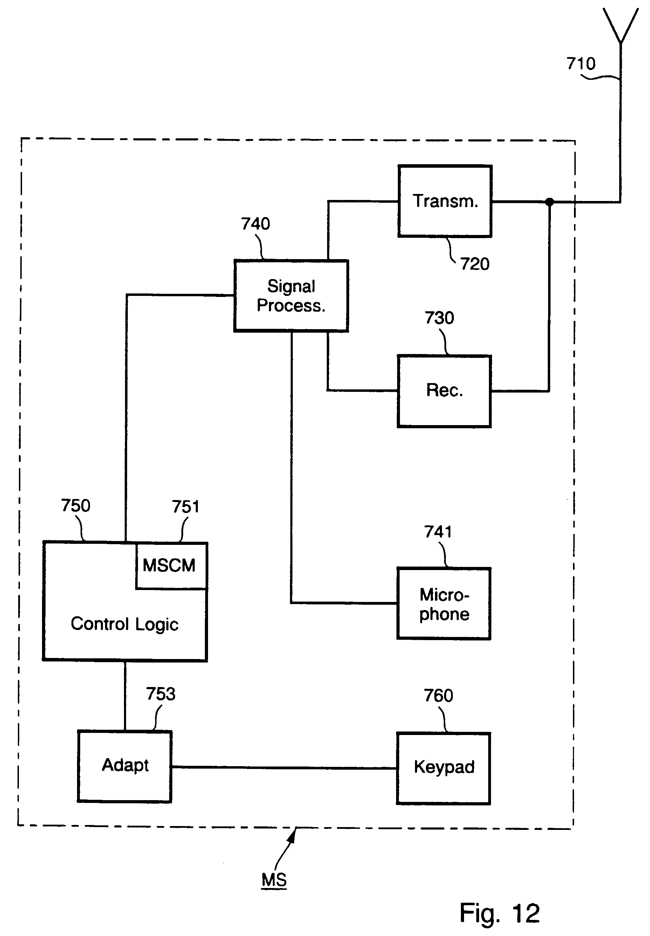

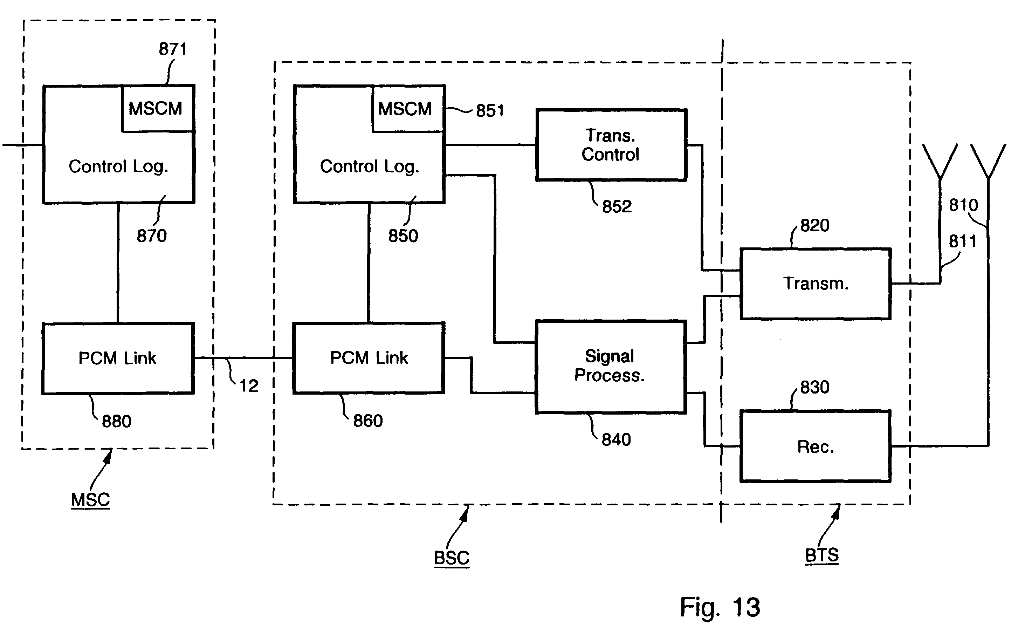

Those messages that are exchanged over the radio channels in the aforedescribed manner are generated in the mobile MS and in the network respectively in a known manner. The equipment required herefor will be described briefly below with reference to Figure 12 and Figure 13.

Figure 12 is a block schematic illustrating the mobile station MS which carries out the inventive method. The mobile station MS has an antenna 710 and a transmitter 720 which is connected to the antenna and controlled by a control logic unit 750. The transmitter is connected to a signal processing unit 740. A receiver 730 is also connected to the antenna and is used in time multiplex together with the transmitter 720. The receiver 730 is also connected to the signal processing unit 740. The transmitter 720 and the receiver 730 include modulating, demodulating and equalizing equipment. Among other things, the signal processing unit 740 carries out channel coding, channel decoding and signal processing of speech information in an incoming and outgoing direction. The signal processing unit 740 is also connected to a microphone and to a telephone receiver, block 741, and to the control logic unit 750. This unit is connected, in turn, to a block 753 which adapts signals from a block 760 including a keyboard and a display window. The invention is realized in the form of data and program sequencies in the control logic unit 750. This unit monitors the physical signal level and, among other things, monitors the transmission relating to the release and handover of the connections. The Figure illustrates a block 751 in the control logic unit responsible for the monitoring of the classification messages MSCM1 and MSCM2, as an example of this monitoring function.

Figure 13 is a block schematic which illustrates the land network of the mobile telecommunication system. Similar to the Figure 2 embodiment, the hardware in the blocks shown in Figure 13 is distributed on the base radio station BTS, the base control unit BSC and the mobile switching centre MSC. The base radio station has two antennas 810 and 811, of which the antenna 810 is a receiving antenna and the antenna 811 is a transmitting antenna. A transmitter 820 is connected to the antenna 811 and is controlled by a transmitter control unit 852 in the base control unit BSC. The transmitter is also connected to a signal processing unit 840 in the base control unit BSC. A receiver 830 in the base radio station BTS is connected to the antenna 810 and also to the signal processing unit 840. The transmitter 820 and the receiver 830 include modulating, demodulating and equalizing equipment. The signal processing unit 840 includes channel coding and decoding and signal processing of speech information in an outgoing and an incoming direction. The signal processing unit 840 is also connected to a PCM-link adapter 860 and to a control logic unit 850. This unit is connected, in turn, to the transmitter control unit 852. The mobile switching centre MSC includes a control logic unit 870 which is connected to a PCM-link adapter 880. This link adapter is connected to the PCM-link adapter 860 in the base control unit BSC, via the line 12. The invention is realized in the form of data and program sequences in the control logic units 850 and 870. These units monitor the physical signal level and also monitor the transmission which, among other things, concerns the release and handover of the connections. As an example of this monitoring process, the drawing shows blocks 851 and 871 in the control logic units which carry out the monitoring and handling of the classification messages MSCM1 and MSCM2 received from the mobile MS.

The invention provides advantages when the establishment of a connection is requested in direct conjunction with registration of the mobile MS in the network. All functions over which the mobile has control can be utilized to the full. For instance, the whole of the frequency range of the mobile can be utilized when assigning the channel SPEECH for the connection. Other functions, such as the short message SM, can be utilized during the connection. This can take place without the signalling channel SDCCH established in the registration procedure being released and reestablished, which saves connection establishing time.

## Claims

1. A method in a mobile telecommunication system for assigning a traffic channel (SPEECH) to a mobile station (MS) which requests registration of its position in the land stationed network (MSC&BSS) of the mobile telecommunication system, wherein the mobile station (MS) has control over at least some of a number of possible functions in the mobile telecommunication system, and wherein a calling subscriber (Ab) requests to be connected to the mobile station (MS) via the network, said method comprising the following method steps:
- the mobile station requests the assignment of a signalling channel (SDCCH) from the network through an access procedure;
- the network assigns the signalling channel (SDCCH) and sends information concerning this channel to the mobile station (MS);
- the mobile station (MS) switches to the signalling channel (SDCCH) and requests the registration;
- the network (MSC&BSS) registers the position of the mobile station (MS) and transmits an accept message to the effect that the mobile station (MS) has been accepted by the network and also a connection establishment message to the effect that the requested connection awaits; and
- the mobile (MS) checks the connection establishment message and confirms that the connection requested is accepted, **characterized** in that the method includes the following further method steps:
- the network (MS&BSS) asks the mobile station (MS) on the signalling channel (SDCCH) for information concerning the functions over which the latter has control, including at least over which frequency range (F, ΔF) it has control;
- the mobile station (MS) replies on the signalling channel (SDCCH) by disclosing those functions over which it has control; and
- the network (MSC&BSS) assigns the traffic channel (SPEECH) for the requested connection within the frequency range capability of the mobile station (MS), and sends over the signalling channel (SDCCH) information concerning the assignment to the mobile station (MS).

2. A method according to Claim 1, in which the mobile station (MS) has stored a second classification message (MSCM2) which includes some of the functions of the mobile telecommunication system and which is transmitted to the network (MSC&BSS) when the mobile station (MS) is paged by the calling subscriber (Ab) subsequent to completing registration and releasing the signalling channel, **characterized** in that the question asked by the network (MSC&BSS) as to the functions over which the mobile station (MS) has control includes a question concerning transmission of the second classification message (MSCM2).

3. A method in a mobile telecommunication system for assigning a traffic channel (SPEECH) to a mobile station (MS) which requests registration of its position in the land stationed network (MSC&BSS) of the mobile telecommunication system, said network including a mobile switching centre (MSC) and at least one base control unit (BSC) which is connected to said mobile switching centre and which assigns channels for requested connections, and in which the mobile station (MS) is capable of effecting at least some of a number of possible functions in the mobile telecommunication system, and in which the mobile station (MS) requests a connection to a called subscriber (Ab) via the network, said method comprising the following method steps:
- the mobile station (MS) requests through an access procedure a signalling channel (SDCCH) from the network (MSC&BSS);
- the network assigns the signalling channel (SDCCH) and transmits information to the mobile station (MS) on this channel;
- the mobile station (MS) switches to the signalling channel (SDCCH) and requests the registration and also permission to set-up the connection to the called subscriber (Ab);
- the network (MSC&BSS) registers the position of the mobile station (MS) and sends an acceptance message to the effect that the mobile station (MS) is accepted by the network;
- the mobile station (MS) informs the network over the signalling channel (SDCCH) of the functions over which the mobile station (MS) has control, at least including over which frequency range (F, ΔF) it has control; and
- the network (MSC&BSS) receives from the mobile station (MS) the information concerning those functions over which the mobile station has control and stores this information in the mobile switching centre (MSC),
**characterized** in that the method includes the further method steps:
- the base control unit (BSC) receives the information from the mobile switching centre (MSC) concerning those functions over which the mobile station (MS) has control;
- the mobile switching centre (MSC) requests the base control unit (BSC) to assign the traffic channel (SPEECH) for the requested connection; and
- the base control unit (BSC) assigns the traffic channel (SPEECH) within the frequency range over which the mobile station (MS) has control, and sends over the signalling channel (SDCCH) information concerning the assigment to the mobile station.

4. A method according to Claim 3, **characterized** in that the base control unit (BSC) receives the information concerning those functions over which the mobile station (MS) has control together with the request made by the mobile switching centre (MSC) for the base control unit (BSC) to assign the traffic channel (SPEECH) for the requested connection.

5. A method according to Claim 3, **characterized** in that the base control unit (BSC) sends to the mobile switching centre (MSC) a message requesting information concerning those functions over which the mobile station (MS) has control.

6. A method in a mobile telecommunication system for assigning a traffic channel (SPEECH) to a mobile station (MS) which requests registration of its position in the land network (MSC&BSS) of the mobile telecommunication system, in which the network includes a mobile switching centre (MSC) and at least one base control unit (BSC) which is connected to said centre and which assigns channels for requested connections, wherein the mobile station (MS) is capable of effecting at least some of a number of possible functions in the mobile telecommunication system, and in which the mobile station (MS) requests a connection to a called subscriber (Ab) via the network (MSC&BSS), said method comprising the following method steps:
- the mobile station (MS) requests a signalling channel (SDCCH) from the network (MSC&BSS) through an access procedure;
- the network assigns the signalling channel (SDCCH) and transmits information to the mobile station (MS) concerning this channel;
- the mobile station (MS) switches to the signalling channel (SDCCH) and requests said registration and also permission to set-up the connection with the called subscriber (Ab);
- the network (MSC&BSS) registers the position of the mobile station (MS) and sends to the mobile station (MS) an accept message stating that the mobile station is accepted by the network and is permitted to set-up the connection;
- the mobile (MS) informs the network (MSC&BSS) on the signalling channel (SDCCH) of those functions over which the mobile (MS) has control, at least including the frequency range (F, ΔF) over which the mobile station has control; and
- the network (MSC&BSS) receives from the mobile station (MS) the information concerning those functions over which the mobile station (MS) has control and stores this information in the mobile switching centre (MSC),
**characterized** in that the method further includes the following method steps:
- the mobile switching centre (MSC) requests the base control unit (BSC) to assign the traffic channel (SPEECH) for the requested connection;
- the base control unit (BSC) asks the mobile station (MS) on the signalling channel (SDCCH) for information concerning those functions over which the mobile station (MS) has control, at least including the frequency range (F, ΔF) over which the mobile station (MS) has control;
- the mobile station (MS) replies on the signalling channel (SDCCH) by disclosing those functions over which it has control; and
- the base station centre (BSC) assigns the traffic channel (SPEECH) within the frequency range capability of the mobile station (MS), and sends over the signalling channel (SDCCH) information concerning the assignment to the mobile station (MS).

## Patentansprüche

1. Verfahren in einem Mobil-Telekommunikationssystem zur Zuweisung eines Verkehrskanals (SPEECH) zu einer Mobilstation (MS), die eine Registrierung ihrer Position in dem landgestützten Netzwerk (MSC&BSS) von dem Mobil-Telekommunikationssystem anfordert, worin die Mobilstation (MS) die Steuerung über zumindest einige von einer Anzahl möglicher Funktionen in dem Mobil-Telekommunikationssystem hat, und worin ein anrufender Teilnehmer (Ab) anfordert, zu der Mobilstation (MS) über das Netzwerk verbunden zu werden, wobei das Verfahren die folgenden Schritte umfaßt:
- Die Mobilstation fordert die Zuweisung von einem Signalisierungskanal (SDCCH) von dem Netzwerk durch ein Zugriffsverfahren an;
- das Netzwerk weist den Signalisierungskanal (SDCCH) zu und sendet Informationen, die diesen Kanal betreffen, zu der Mobilstation (MS);
- die Mobilstation (MS) schaltet zu dem Signalisierungskanal (SDCCH) und fordert die Registrierung an;
- das Netzwerk (MSC&BSS) registriert die Position der Mobilstation (MS) und überträgt eine Zulassungsnachricht mit dem Inhalt, daß die Mobilstation (MS) von dem Netzwerk zugelassen wurde, und eine Verbindungs-Errichtungs-Nachricht mit dem Inhalt, daß die angeforderte Verbindung ansteht; und
- die Mobilstation (MS) überprüft die Verbindungs-Errichtungs-Nachricht und bestätigt, daß die angeforderte Verbindung zugelassen wurde, **dadurch gekennzeichnet**, daß die Methode die folgenden weiteren Schritte umfaßt:
- das Netzwerk (MS&BSS) frägt die Mobilstation (MS) auf dem Signalisierungskanal (SDCCH) nach Informationen, die die Funktionen betreffen, über die letztere die Steuerung hat, zumindest nach dem Frequenzbereich (F, ΔF), über den sie die Steuerung hat;
- die Mobilstation (MS) antwortet auf dem Signalisierungskanal (SDCCH), indem sie die Funktionen, über die sie die Steuerung hat, angibt; und
- das Netzwerk (MSC&BSS) weist den Verkehrskanal (SPEECH) für die angeforderte Verbindung innerhalb des Frequenzbereichvermögens von der Mobilstation (MS) zu und sendet über den Signalisierungskanal (SDCCH) Informationen, die die Zuweisung betreffen, zu der Mobilstation (MS).

2. Verfahren gemäß Anspruch 1, in dem die Mobilstation (MS) eine zweite Klassifizierungsnachricht (MSCM2) gespeichert hat, die einige der Funktionen des Mobil-Telekommunikationssystems umfaßt, und die zu dem Netzwerk (MSC&BSS) übertragen wird, wenn die Mobilstation (MS) von einem anrufenden Teilnehmer (Ab) nach einer Beendigung einer Registrierung und einer Freigabe des Signalisierungskanals ausgerufen wird, **dadurch gekennzeichnet**, daß die Frage, die von dem Netzwerk (MSC&BSS) gestellt wird bezüglich der Funktionen, über die die Mobilstation (MS) die Steuerung hat, eine Frage umfaßt, die eine Übertragung der zweiten Klassifizierungsnachricht (MSCM2) betrifft.

3. Verfahren in einem Mobil-Telekommunikationssystem zur Zuweisung eines Verkehrskanals (SPEECH) zu einer Mobilstation (MS), die eine Registrierung ihrer Position in dem landgestützten Netzwerk (MSC&BSS) des Mobil-Telekommunikationssystems anfordert, wobei das Netzwerk eine Mobilstationsvermittlung (MSC) und zumindest eine Basissteuereinrichtung (BSC) umfaßt, die mit der Mobilstationsvermittlung verbunden ist und die Kanäle für angeforderte Verbindungen zuweist, und in der die Mobilstation (MS) in der Lage ist, zumindestens einige von einer Anzahl möglicher Funktionen in dem Mobil-Telekommunikationssystem auszuführen, und in dem die Mobilstation (MS) eine Verbindung zu einem angerufenen Teilnehmer (Ab) über das Netzwerk anfordert, wobei das Verfahren die folgenden Schritte umfaßt:
- Die Mobilstation (MS) fordert durch ein Zugriffsverfahren einen Signalisierungskanal (SDCCH) von dem Netzwerk (MSC&BSS) an;
- das Netzwerk weist den Signalisierungskanal (SDCCH) zu und überträgt Informationen auf diesem Kanal zu der Mobilstation (MS);
- die Mobilstation (MS) schaltet zu dem Signalisierungskanal (SDCCH) und fordert die Registrierung an und erlaubt ebenso die Errichtung einer Verbindung zu dem angerufenen Teilnehmer (Ab);
- das Netzwerk (MSC&BSS) registriert die Position der Mobilstation (MS) und sendet eine Zulassungsnachricht mit dem Inhalt, daß die Mobilstation (MS) von dem Netzwerk zugelassen ist;
- die Mobilstation (MS) informiert das Netzwerk über den Signalisierungskanal (SDCCH) von den Funktionen, über die die Mobilstation (MS) die Steuerung hat, zumindest über welchen Frequenzbereich (F, ΔF) sie die Steuerung hat; und
- das Netzwerk (MSC&BSS) empfängt von der Mobilstation (MS) die Informationen, die solche Funktionen betreffen, über die die Mobilstation die Steuerung hat, und speichert diese Informationen in der Mobilstationsvermittlung (MSC), **dadurch gekennzeichnet**, daß das Verfahren folgende weitere Schritte umfaßt:
- die Basissteuereinrichtung (BSC) empfängt die Informationen von der Mobilstationsvermittlung (MSC), die solche Funktionen betreffen, über die die Mobilstation (MS) die Steuerung hat;
- die Mobilstationsvermittlung (MSC) fordert die Basissteuereinrichtung (BSC) auf, den Verkehrskanal (SPEECH) für die angeforderte Verbindung zuzuweisen; und
- die Basissteuereinrichtung (BSC) weist den Verkehrskanal (SPEECH) innerhalb des Frequenzbereichs, über den die Mobilstation (MS) die Steuerung hat, zu und sendet über den Signalisierungskanal (SDCCH) Informationen, die die Zuweisung betreffen, zu der Mobilstation.

4. Verfahren gemäß Anspruch 3, **dadurch gekennzeichnet**, daß die Basissteuereinrichtung (BSC) die Informationen, die solche Funktionen betreffen, über die die Mobilstation (MS) die Steuerung hat, zusammen mit der Anfrage von der Mobilstationsvermittlung (MSC) für die Basissteuereinrichtung (BSC) den Verkehrskanal (SPEECH) für die angeforderte Verbindung zuzuweisen, empfängt.

5. Verfahren gemäß Anspruch 3, **dadurch gekennzeichnet**, daß die Basissteuereinrichtung (BSC) eine Nachricht zu der Mobilstationsvermittlung (MSC) schickt, die Informationen bezüglich solcher Funktionen, über die die Mobilstation (MS) eine Steuerung hat, anfordert.

6. Verfahren in einem Mobil-Telekommunikationssystem zur Zuweisung eines Verkehrskanals (SPEECH) zu einer Mobilstation (MS), die eine Registrierung ihrer Position in dem landgestützten Netzwerk (MSC&BSS) des Mobil-Telekommunikationssystems anfordert, in dem das Netzwerk eine Mobilstationsvermittlung (MSC) und zumindest eine Basissteuereinrichtung (BSC) umfaßt, die mit der Vermittlung verbunden ist, und die Kanäle für angeforderte Verbindungen zuweist, worin die Mobilstation (MS) in der Lage ist, zumindestens einige von der Anzahl von möglichen Funktionen in dem Mobil-Telekommunikationssystem auszuführen, und in dem die Mobilstation (MS) eine Verbindung zu einem angerufenen Anrufer (Ab) über das Netzwerk (MSC&BSS) anfordert, wobei das Verfahren die folgenden Schritte umfaßt:
- Die Mobilstation (MS) fordert einen Signalisierungskanal (SDCCH) von dem Netzwerk (BSC&BSS) durch ein Zugriffsverfahren an;
- das Netzwerk weist den Signalisierungskanal (SDCCH) zu und überträgt Informationen, die diesen Kanal betreffen, zu der Mobilstation (MS);
- die Mobilstation (MS) schaltet zu dem Signalisierungskanal (SDCCH) und fordert die Registrierung an und erlaubt ebenso die Errichtung der Verbindung mit dem angerufenen Teilnehmer (Ab);
- das Netzwerk (MSC&BSS) registriert die Position der Mobilstation (MS) und sendet eine Zulassungsnachricht zu der Mobilstation (MS), die besagt, daß die Mobilstation von dem Netzwerk zugelassen wurde und befugt ist, die Verbindung zu errichten;
- die Mobilstation (MS) informiert das Netzwerk (MSC&BSS) auf dem Signalisierungskanal (SDCCH) über solche Funktionen, über die die Mobilstation (MS) die Steuerung hat, zumindestens über den Frequenzbereich (F, ΔF), über den die Mobilstation die Steuerung hat; und
- das Netzwerk (MSC&BSS) empfängt von der Mobilstation (MS) die Informationen, die solche Funktionen, über die die Mobilstation (MS) eine Steuerung hat, betreffen, und speichert diese Informationen in der Mobilstationsvermittlung (MSC),
**dadurch gekennzeichnet**, daß das Verfahren des weiteren folgende Schritte umfaßt:
- die Mobilstationsvermittlung (MSC) fordert die Basissteuereinrichtung (BSC) auf, den Verkehrskanal (SPEECH) für die angeforderte Verbindung zuzuweisen;
- die Basissteuereinrichtung (BSC) frägt die Mobilstation (MS) auf dem Signalisierungskanal (SDCCH) nach Informationen, die solche Funktionen betreffen, über die die Mobilstation (MS) die Steuerung hat, zumindest nach dem Frequenzbereich (F, ΔF), über den die Mobilstation (MS) die Steuerung hat;
- die Mobilstation (MS) antwortet auf dem Signalisierungskanal (SDCCH), indem sie solche Funktionen angibt, über die sie die Steuerung hat; und
- die Basisstationszentrale (BSC) weist den Verkehrskanal (SPEECH) innerhalb des Frequenzbereichvermögens der Mobilstation (MS) zu, und sendet über den Signalisierungskanal (SDCCH) Informationen, die die Zuweisung betreffen, zu der Mobilstation (MS).

## Revendications

1. Procédé dans un système de télécommunication mobile pour affecter un canal de trafic (SPEECH) à une station mobile (MS) qui demande l'enregistrement de sa position dans le réseau terrestre (MSC & BSS) du système de télécommunication mobile, dans lequel la station mobile (MS) exerce une commande sur au moins quelques fonctions parmi un certain nombre de fonctions possibles dans le système de télécommunication mobile, et dans lequel un abonné demandeur (Ab) demande à être connecté à la station mobile (MS) par l'intermédiaire du réseau, ce procédé comprenant les étapes de procédé suivantes :
- la station mobile demande l'affectation d'un canal de signalisation (SDCCH) par le réseau, par l'intermédiaire d'une procédure d'accès;
- le réseau affecte le canal de signalisation (SDCCH) et il émet vers la station mobile (MS) une information concernant ce canal;
- la station mobile (MS) commute vers le canal de signalisation (SDCCH) et demande l'enregistrement;
- le réseau (MSC & BSS) enregistre la position de la station mobile (MS) et il émet un message d'acceptation pour indiquer que la station mobile (MS) a été acceptée par le réseau, et également un message d'établissement de connexion pour indiquer que la connexion demandée est en attente; et
- la station mobile (MS) contrôle le message d'établissement de connexion et confirme que la connexion demandée est acceptée, caractérisé en ce que le procédé comprend les étapes de procédé supplémentaires suivantes :
- le réseau (MSC & BSS) demande à la station mobile (MS), sur le canal de signalisation (SDCCH), une information concernant les fonctions sur lesquelles cette dernière exerce une commande, comprenant au moins la gamme de fréquence particulière (F, ΔF) sur laquelle elle exerce une commande;
- la station mobile (MS) répond sur le canal de signalisation (SDCCH) en indiquant les fonctions sur lesquelles elle exerce une commande; et
- le réseau (MSC & BSS) affecte le canal de trafic (SPEECH) pour la connexion demandée, dans les possibilités de gamme de fréquence de la station mobile (MS), et elle émet vers la station mobile (MS), sur le canal de signalisation (SDCCH), une information concernant l'affectation.

2. Procédé selon la revendication 1, dans lequel la station mobile (MS) a enregistré un second message de classification (MSCM2) qui comprend certaines des fonctions du système de télécommunication mobile et qui est émis vers le réseau (MSC & BSS) lorsque la station mobile (MS) est recherchée par l'abonné demandeur (Ab) à la suite de l'achèvement de l'enregistrement et du relâchement du canal de signalisation, caractérisé en ce que la question qui est posée par le réseau (MSC & BSS) concernant les fonctions sur lesquelles la station mobile (MS) exerce une commande, comprend une question concernant l'émission du second message de classification (MSCM2).

3. Procédé dans un système de télécommunication mobile pour affecter un canal de trafic (SPEECH) à une station mobile (MS) qui demande l'enregistrement de sa position dans le réseau terrestre (MSC & BSS) du système de télécommunication mobile, ce réseau comprenant un centre de commutation de service mobile (MSC) et au moins une unité de commande de base (BSC) qui est connectée au centre de commutation de service mobile et qui affecte des canaux pour des connexions demandées, et dans lequel la station mobile (MS) est capable d'accomplir au moins quelques fonctions parmi un certain nombre de fonctions possibles dans le système de télécommunication mobile, et dans lequel la station mobile (MS) demande une connexion à un abonné demandé (Ab) par l'intermédiaire du réseau, ce procédé comprenant les étapes de procédé suivantes :
- la station mobile (MS) demande au réseau (MSC & BSS) un canal de signalisation (SDCCH), par l'intermédiaire d'une procédure d'accès;
- le réseau affecte le canal de signalisation (SDCCH) et émet de l'information vers la station mobile (MS) sur ce canal;
- la station mobile (MS) commute vers le canal de signalisation (SDCCH) et elle demande l'enregistrement et également la permission d'établir la connexion avec l'abonné demandé (Ab);
- le réseau (MSC & BSS) enregistre la position de la station mobile (MS) et il émet un message d'acceptation pour indiquer que la station mobile (MS) est acceptée par le réseau;
- la station mobile (MS) indique au réseau, par l'intermédiaire du canal de signalisation (SDCCH), les fonctions sur lesquelles la station mobile (MS) exerce une commande, ceci comprenant au moins la gamme de fréquence (F, ΔF) sur laquelle la station mobile exerce une commande; et
- le réseau (MSC & BSS) reçoit à partir de la station mobile (MS) l'information concernant les fonctions sur lesquelles la station mobile exerce une commande, et il enregistre cette information dans le centre de commutation de service mobile (MSC),
caractérisé en ce que le procédé comprend en outre les étapes de procédé suivantes :
- l'unité de commande de base (BSC) reçoit l'information provenant du centre de commutation de service mobile (MSC), concernant les fonctions sur lesquelles la station mobile (MS) exerce une commande;
- le centre de commutation de service mobile (MSC) demande à l'unité de commande de base (BSC) d'affecter le canal de trafic (SPEECH) pour la connexion demandée; et
- l'unité de commande de base (BSC) affecte le canal de trafic (SPEECH) dans la gamme de fréquence sur laquelle la station mobile (MS) exerce une commande, et elle émet vers la station mobile, sur le canal de signalisation (SDCCH), une information concernant l'affectation.

4. Procédé selon la revendication 3, caractérisé en ce que l'unité de commande de base (BSC) reçoit l'information concernant les fonctions sur lesquelles la station mobile (MS) exerce une commande, conjointement à la demande effectuée par le centre de commutation de service mobile (MSC) pour que l'unité de commande de base (BSC) affecte le canal de trafic (SPEECH) pour la connexion demandée.

5. Procédé selon la revendication 3, caractérisé en ce que l'unité de commande de base (BSC) émet vers le centre de commutation de service mobile (MSC) un message demandant de l'information concernant les fonctions sur lesquelles la station mobile (MS) exerce une commande.

6. Procédé dans un système de télécommunication mobile pour affecter un canal de trafic (SPEECH) à une station mobile (MS) qui demande l'enregistrement de sa position dans le réseau terrestre (MSC & BSS) du système de télécommunication mobile, dans lequel le réseau comprend un centre de commutation de service mobile (MSC) et au moins une unité de commande de base (BSC) qui est connectée à ce centre et qui affecte des canaux pour des connexions demandées, dans lequel la station mobile (MS) est capable d'accomplir au moins quelques fonctions parmi un certain nombre de fonctions possibles dans le système de télécommunication mobile, et dans lequel la station mobile (MS) demande une connexion à un abonné demandé (Ab), par l'intermédiaire du réseau (MSC & BSS), ce procédé comprenant les étapes de procédé suivantes :
- la station mobile (MS) demande au réseau (MSC & BSS) un canal de signalisation (SDCCH), par l'intermédiaire d'une procédure d'accès;
- le réseau affecte le canal de signalisation (SDCCH) et il émet vers la station mobile (MS) une information concernant ce canal;
- la station mobile (MS) commute vers le canal de signalisation (SDCCH) et elle demande l'enregistrement précité et également la permission d'établir la connexion avec l'abonné demandé (Ab);
- le réseau (MSC & BSS) enregistre la position de la station mobile (MS) et il émet vers la station mobile (MS) un message d'acceptation indiquant que la station mobile est acceptée par le réseau et est autorisée à établir la connexion;
- la station mobile (MS) indique au réseau (MSC & BSS), sur le canal de signalisation (SDCCH), les fonctions sur lesquelles la station mobile (MS) exerce une commande, ceci comprenant au moins la gamme de fréquence (F, ΔF) sur laquelle la station mobile exerce une commande; et
- le réseau (MSC & BSS) reçoit à partir de la station mobile (MS) l'information concernant les fonctions sur lesquelles la station mobile (MS) exerce une commande, et il enregistre cette information dans le centre de commutation de service mobile (MSC),
caractérisé en ce que le procédé comprend en outre les étapes de procédé suivantes :
- le centre de commutation de service mobile (MSC) demande à l'unité de commande de base (BSC) d'affecter le canal de trafic (SPEECH) pour la connexion demandée;
- l'unité de commande de base (BSC) demande à la station mobile (MS), sur le canal de signalisation (SDCCH), une information concernant les fonctions sur lesquelles la station mobile (MS) exerce une commande, cette information comprenant au moins la gamme de fréquence (F, ΔF) sur laquelle la station mobile (MS) exerce une commande;
- la station mobile (MS) répond sur le canal de signalisation (SDCCH) en indiquant les fonctions sur lesquelles elle exerce une commande; et
- l'unité de commande de base (BSC) affecte le canal de trafic (SPEECH) dans les possibilités de gamme de fréquence de la station mobile (MS), et elle émet vers la station mobile (MS), sur le canal de signalisation (SDCCH), une information concernant l'affectation.
